Europäisches Patentamt

European Patent Office

Office européen des brevets

(11) Publication number: **0 239 143**
**A2**

## (12) EUROPEAN PATENT APPLICATION

(21) Application number: **87200323.1**

(22) Date of filing: **25.02.87**

(51) Int. Cl.⁴: **G01N 21/89 , B27G 1/00**

(30) Priority: **21.03.86 IT 1982386**

(43) Date of publication of application:
**30.09.87 Bulletin 87/40**

(84) Designated Contracting States:
**AT BE CH DE ES FR GB GR LI LU NL SE**

(71) Applicant: **CREMONA LORENZO**
**Via Ramazzotti, 9**
**I-20052 Monza (Milano)(IT)**

(72) Inventor: **Luminari Massimo**
**Via Ugo Foscolo 12**
**I-20050 Lesmo (Milano)(IT)**

(74) Representative: **Faraggiana, Vittorio, Dr. Ing.**
**et al**
**Ingg. Guzzi e Ravizza S.r.l. Via Boccaccio, 24**
**I-20123 Milano(IT)**

(54) **System for detecting and correcting defects in articles being processed, in particular wood sheets with splits, knot-holes, etc.,requiring to be plugged.**

(57) The invention relates to a system for detecting and correcting defects in articles being processed, signally wood sheets carried on a conveyor, and comprising in combination: at least one television camera and lighting means that will scan the surface of the underlying sheets to detect the said defects; a plurality of operating complexes disposed downstream of the said television camera and each comprising means for correcting the said defects, provision being made between the said television camera and and the said operating complexes for a battery of data processing units which process the data received from the television camera in order to obtain the information necessary for the said operating complexes to be appropriately controlled.

Fig. 2

# SYSTEM FOR DETECTING AND CORRECTING DEFECTS IN ARTICLES BEING PROCESSED, IN PARTICULAR WOOD SHEETS WITH SPLITS, KNOT-HOLES, ETC., REQUIRING TO BE PLUGGED

The present invention relates to a system for automatically detecting and correcting defects in articles being processed, in particular plywood sheets with splits, knot-holes, etc. requiring to be satisfactorily plugged.

As is well-known to persons skilled in the art, a plywood sheet production line includes a defect detection and plugging station, the defects in question being splits, knot-holes and the like, which can always occur in this type of article.

The operations of detection and plugging have to date been carried out by production line operators using entirely manual methods. In such cases, assessment of the defects by the operator is subjective; and when the assessment has been made the operator himself plugs the defects manually, using suitable equipment.

This mode of operating means that, if it is wished to keep output at acceptable levels, a large morkforce must be employed and this in turns means that the plugging operation has a very high incidence on the final cost of each sheet. Additionally, the operator's assessment and plugging of the defect are not always optimal.

The general object of the present invention is to obviate the aforementioned drawbacks by embodying a system that will fully automate the operations in question, minimizing the workforce required.

To attain this object, the invention according to the present application embodies a system for detecting and correcting defects in articles being processed, in particular wood sheets carried by a conveyor, wherein there are used in combination: at least one television camera and lighting means that will scan the surface of the underlying sheets to detect the said defects, a plurality of operating complexes disposed downstream of the television camera and each comprising means for correcting the defects, provision being made between the said television camera and the said operating complexes for a battery of data processing units which process the data received from the television camera in order to obtain the information necessary for the operating complexes to be appropriately controlled.

The structural and functional characteristics of the invention, and its advantages over the known art, will become more apparent from an examination of the following illustrative and not limiting description, referred to the appended diagrammatic drawings, in which:

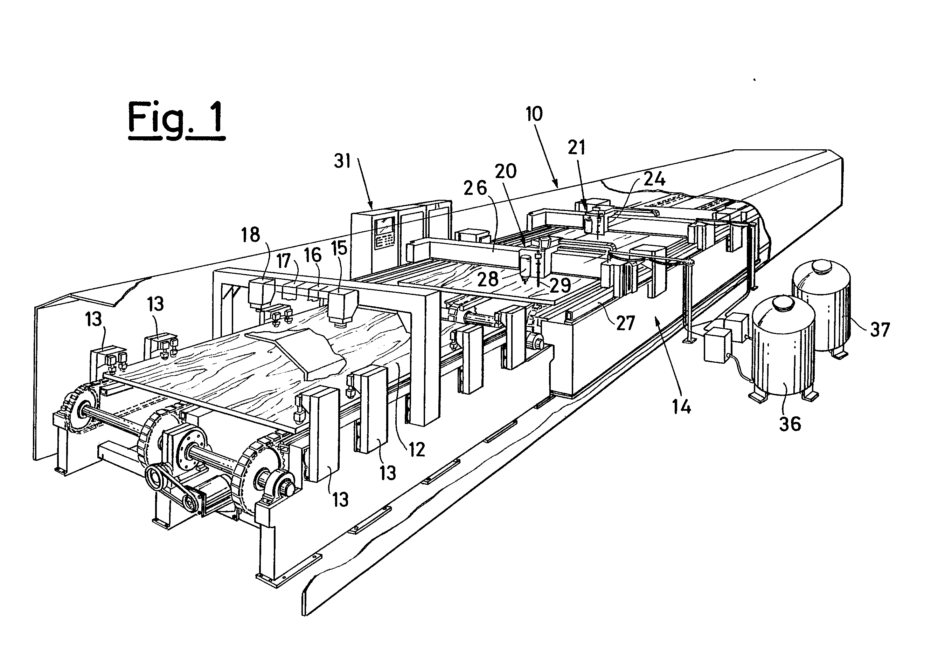

-Figure 1 is a perspective view of an apparatus for the embodiment of the system according to the invention for the detection and correction of defects present in the plywood sheet;

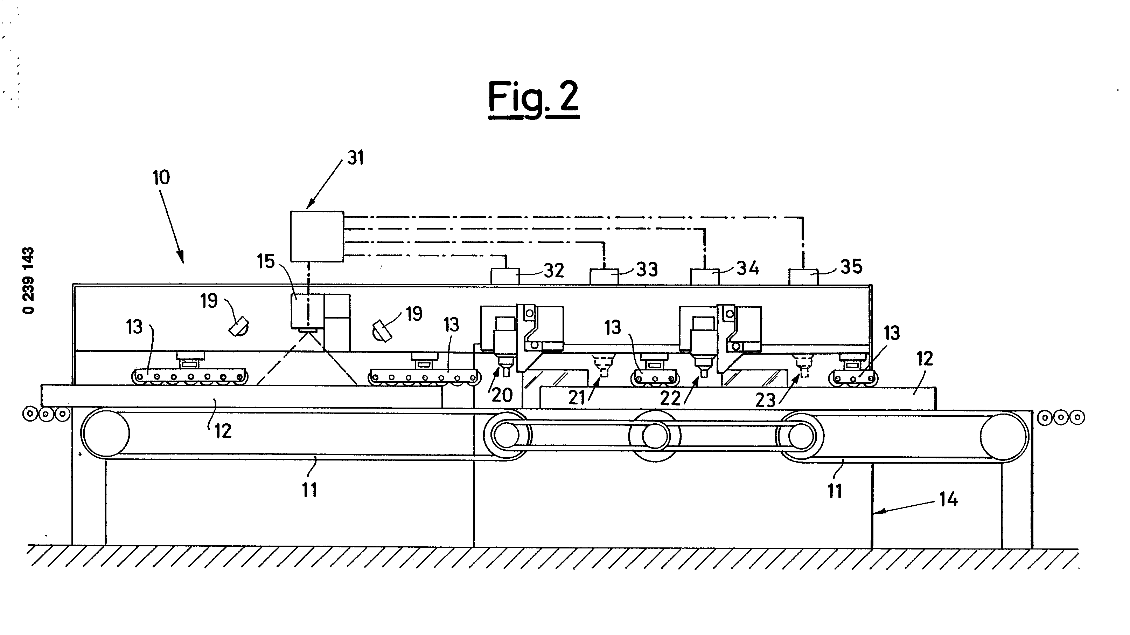

-Figure 2 is a longitudinal elevational view;

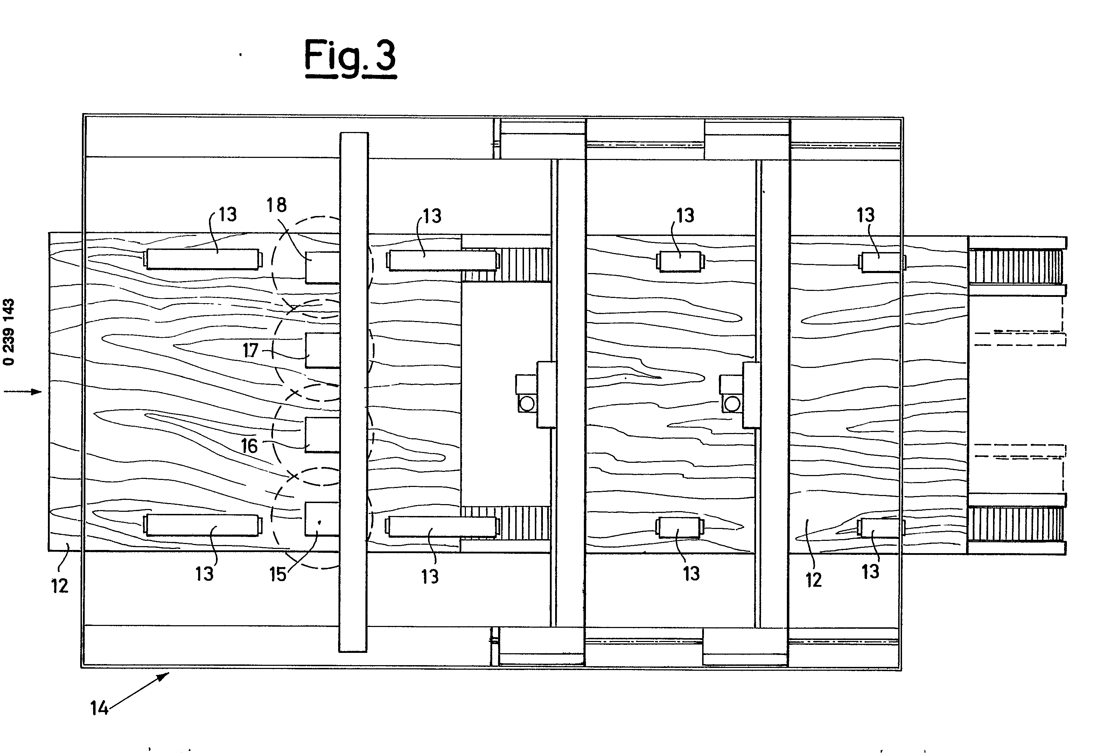

-Figure 3 is a plan view; and

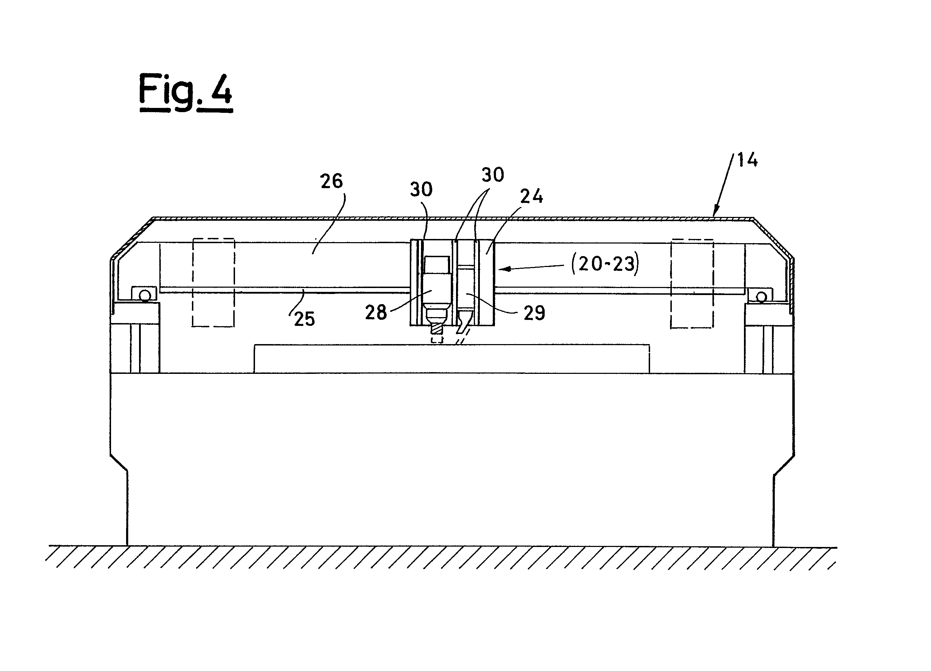

-Figure 4 is a cross section of the apparatus.

With reference to the drawings, the said apparatus is indicated overall by 10 and structurally consists of a powered belt conveyor 11 on which wood sheets 12 for processing are positioned and pressed by pressors 13 and fed step-wise by pre-established distances.

Conveyors of this type are well-known and are therefore not herein described in detail.

The conveyor 11 is supported by a frame 14 on which there is mounted one or more television camers 15, 16, 17, 18 which can scan the surface of the underlying sheet 12 which is lit in an adequate manner through the intermediary of lamps 19.

Downstream of the television cameras 15-18 there are provided respective operating complexes 20, 21, 22 and 23, each supported by a slide 24 which moves transversally on guides 25 of a crossmember 26 which can in turn move longitudinally on guides 27 of the frame 14.

Each operating complex 20-23 comprises a powered tool 28 and a plugging device 29, each movable vertically on guides 30. The tools 28 and devices 29 can thus move longitudinally, transversally and vertically with respect to the underlying sheets 12, i.e. along the three Cartesian coordinates.

Each of the television cameras 15-18 is operatively connected to a respective operating complex 20-23 through the intermediary of a processor 31 the outputs of which transmit to a plurality of numerical control units 32, 33, 34 and 35, which control the said complexes.

The numeral 36 and 37 indicate two reservoirs containing compounds suitable for forming the plugging material which is fed to the plugging devices 29.

The mode of operation of the system described above is briefly as follows. Motion is imparted to the belt conveyors 11 for example by a permanent-magnet motor (sheet translation axis). An encoder connected to the motor establishes the longitudinal position of the sheet. The distance between the lateral supports can be varied and adjusted in relation to the width of the workpiece.

The stepwise feed of the sheet is for example programmed for maximum steps of 600 mm, and during this stage the sheets are scanned by the solid-state television cameras 15-18 which effect real time identification of defects by comparison with sample defects stored in the memory of the processing unit 31.

The operating principle of the system is thus based on providing the system control unit with information as to the salient characteristics of one or more sample defects placed within the field of vision of the television cameras and lit so that, for example, defects involving swelling can be distinguished from defects of a cellular kind. The defects which the system defines as unacceptable are identified and their exact position established by coordinates.

The defect detection system can be positioned on both sides of the apparatus used to receive the sheet in the opposite direction after it has left the belt conveyor and been turned over for processing on its other side.

The data detected by the television cameras are processed by the processing unit 31 which transmits signals to the numerical control units 32-35, which then control the respective operating complexes 20-23.

As mentioned, each operating complex can be embodied with two heads for, respectively, milling, sanding and plugging with stoppers or resins any holes present from the outset and/or caused subsequently by processing tools, thus correcting the defects detected by the previous telecamera scanning operation.

The heads move along the two axes X, Y, controlled by permanent-magnet motors, ballscrews and on slide guides.

At maximum operating capacity, a plurality of simultaneously operating heads are employed.

The vertical axes Z are controlled independently between the different heads through the intermediary of pneumatic cylinders, and the work strokes can be programmed using a turret positioner.

Preferably, provision is also made for a high-efficiency exhaust system, with tool shrouding, for the removal of chips, dust, etc. occuring during processing.

The number of operating modules of which the system is composed is determined by the output required and the number of defects on the surfaces of the sheets.

During defect correction operations, the sheets are held firm on a support surface.

## Claims

1) A system for detecting and correcting defects in articles being processed, signally wood sheets with splits, knot-holes, etc., carried on belt conveyors, wherein there are used in combination: at least one television camera and lighting means that will scan the surface of the underlying sheets to detect the said defects, a plurality of operating complexes disposed downstream of the television camera and each comprising means for correcting the defects, provision being made between the said television camera and the said operating complexes for a battery of data processing units which process the data received from the television camera in order to obtain the information necessary for the operating complexes to be appropriately controlled.

2) A system as described in claim 1, wherein the said means for correcting the said defects consist of a power-tool and a plugging-device, both movable along the three Cartesian coordinates.

3) A system as described in claim 1, wherein the said battery of data processing units comprises a processor in which the data transmitted by the television camera are compared with sample data, the output data from said processor being sent to respective numerical control units, each of which controls its respective operating complex.

Fig.1

Fig.2

Fig.3

# Fig. 4

0 239 143